# EUROPÄISCHE PATENTANMELDUNG

(11) **EP 4 049 932 A1**
(43) Veröffentlichungstag der Anmeldung: **31.08.2022**
(21) Anmeldenummer: 22158130.9
(22) Anmeldetag: 23.02.2022
(51) Int. Cl.: B64D 9/00, B60P 7/08

(54) **ZWEITEILIGE MONTAGESCHIENE FÜR EIN FAHRZEUG**

(30) Priorität: 25.02.2021 DE 102021104500
(71) Anmelder: Premium AEROTEC GmbH, 86179 Augsburg (DE)
(72) Erfinder: PAUL, Carsten, 86179 Augsburg (DE); HÖRGER, Bernhard, 86179 Augsburg (DE); HAACK, Cord, 86179 Augsburg (DE)
(74) Vertreter: LKGLOBAL Lorenz & Kopf PartG mbB Patentanwälte

(57) **Zusammenfassung**

Es ist eine Montageschiene (100) zum Aufnehmen und Halten von Lasten (200) in einem Innenraum eines Fahrzeugs angegeben. Die Montageschiene (100) weist ein Stützelement (110) mit einer sich in Längsrichtung (114) des Stützelements (110) erstreckenden Vertiefung (113) und ein Schienenelement (120) auf. Das Schienenelement (120) ist in der Vertiefung (113) des Stützelements (110) angeordnet und mit dem Stützelement (110) mechanisch gekoppelt. Das Schienenelement (120) weist einen Aufnahmeraum (124) zum Aufnehmen und Halten von Lasten (200) aufweist. Die Montageschiene ist zweigeteilt, so dass für Stützelement und Schienenelement unterschiedliche Materialien verwendet werden können, welche die jeweiligen individuellen Anforderungen hieran erfüllen.

## Beschreibung

### Technisches Gebiet

Die vorliegende Beschreibung betrifft eine Montageschiene zum Aufnehmen und Halten von Lasten in einem Innenraum eines Fahrzeugs, insbesondere im Innenraum eines Luftfahrzeugs.

### Technischer Hintergrund

Montageschienen werden typischerweise in der Kabine von Luftfahrzeugen verwendet, um verschiedenste Inneneinrichtungselemente (allgemein: Lasten) aufzunehmen und in ihrer Position zu halten. Beispielsweise werden Montageschienen verwendet, um die Sitze in einem Passagierflugzeug in einer gewünschten Position zu montieren. In dieser Verwendung werden Montageschienen daher als Sitzschienen bezeichnet.

Solche Montageschienen können aber auch verwendet werden, um andere Einrichtungsgegenstände im Innenraum aufzunehmen und in einer gewünschten Position zu halten. Beispielsweise können Trennwände in einer Montageschiene fixiert werden. Auch können ganze Einrichtungsmodule, wie sie beispielsweise in einer Bordküche oder eine Toiletteneinheit vorkommen, in einer Montageschiene fixiert werden.

Montageschiene werden typischerweise im Boden der Kabine verlegt. Allerdings können Montageschienen auch an oder in einer Seitenwand oder einer Decke der Kabine angeordnet sein, um mehrere Befestigungspunkte für ein zu befestigendes Element zu bieten.

Eine Montageschiene bietet ein großes Maß an Flexibilität hinsichtlich des Aufbaus des Innenraums sowie der darin enthaltenen Elemente. Es ist in der Regel möglich, die zu befestigenden Elemente in der Montageschiene in Längsrichtung zu verschieben oder aus der Montageschiene zu entnehmen und an einer anderen Position einzusetzen.

Die Montageschienen sind oftmals mit einem standardisierten Schienenraster versehen. Mehrere in regelmäßigen Abständen wiederkehrende Einkerbungen sind vorgesehen, um das Platzieren und Fixieren von zu befestigenden Elementen zu vereinfachen.

Üblicherweise erstreckt sich eine Montageschiene über einen Großteil oder gar die Gesamtheit des Innenraums eines Flugzeugs und verläuft somit durch Bereiche der Kabine, welche unterschiedlichen Verwendungen gewidmet sind.

### Beschreibung

Es kann als Aufgabe betrachtet werden, eine Montageschiene anzugeben, welche für verschiedene Einsatzzwecke in unterschiedlichen Umgebungen in dem Innenraum eines Fahrzeugs verwendet werden kann.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß einem ersten Aspekt ist eine Montageschiene zum Aufnehmen und Halten von Lasten in einem Innenraum eines Fahrzeugs angegeben. Die Montageschiene weist ein Stützelement und ein Schienenelement auf. Das Stützelement enthält eine sich in Längsrichtung des Stützelements erstreckende Vertiefung. Das Schienenelement ist in der Vertiefung des Stützelements angeordnet und mit dem Stützelement mechanisch gekoppelt. Das Schienenelement weist einen Aufnahmeraum zum Aufnehmen und Halten von Lasten auf.

Damit ist die hier beschriebene Montageschiene zweigeteilt bzw. besteht aus zwei separaten Elementen, welche modular zusammengesetzt werden können. Hierdurch kann die Montageschiene gemäß unterschiedlichen Anforderungen individuell und bezogen auf einen festgelegten Abschnitt zusammengesetzt werden. Beispielsweise können mit der hier beschriebenen Montageschiene Anforderungen erreicht werden, welche mit einer einteiligen Montageschiene nicht oder nur schwer erreicht werden können. So kann beispielsweise das Stützelement aus einem Material mit niedrigerem spezifischem Gewicht als das Schienenelement gefertigt sein, wohingegen das Schienenelement als dem Innenraum des Fahrzeugs zugewandtes Bauteil Anforderungen wie mechanische Festigkeit, Korrosionsbeständigkeit, etc. erfüllt und dafür aus einem Material gefertigt sein kann, welches ein höheres spezifisches Gewicht hat als das Stützelement hat.

Entlang verschiedener Längsabschnitte der Montageschiene können unterschiedliche Schienenelemente in das Stützelement eingesetzt werden, um damit den wechselnden Anforderungen in einem Fahrzeuginnenraum gerecht zu werden. Das Stützelement kann durchgehend aus demselben Material gefertigt sein, wohingegen das Schienenelement gemäß den örtlichen oder lokalen Anforderungen eingesetzt wird. Beispielsweise kann in einem Nassbereich eines Flugzeugs ein anderes Schienenelement verwendet werden als in einem Passagiersitzbereich. Es ist auch denkbar, dass als Schienenelement ein Blindelement verwendet wird, und zwar in solchen Abschnitten, in welchen keine externen Elemente mit der Montageschiene gekoppelt werden müssen. Hier hat das Schienenelement lediglich den Zweck, das Stützelement abzudecken.

Die hier beschriebene Montageschiene kann besonders vorteilhaft in einer Wand oder dem Boden von Fahrzeugen, insbesondere Luftfahrzeugen, verwendet werden. Hierbei wird das Stützelement mit einer Tragestruktur des Fahrzeugs verbunden.

Die Vertiefung des Stützelements erstreckt sich über mindestens einen Abschnitt des Stützelements in Längsrichtung desselben. Dabei bildet die Vertiefung eine längliche, kanalartige Vertiefung oder Nut.

Das Stützelement ist typischerweise länger als das Schienenelement, so dass das Schienenelement bevorzugt über seine gesamte Länge in der Vertiefung des Stützelements aufgenommen ist. Dies trägt dazu bei, dass eine auf das Schienenelement übertragene Kraft vorteilhaft auf das Stützelement und die Tragestruktur des Fahrzeugs übertragen werden kann.

Beispielsweise kann sich das Stützelement über einen Großteil oder die gesamte Länge des Innenraums eines Fahrzeugs erstrecken und die Vertiefung wird nach Bedarf mit einem passenden Schienenelement ausgestattet. Dieser Aufbau der Montageschiene ermöglicht es, dass die Montageschiene aus unterschiedlich aufgebauten und gestalteten Stützelementen und Schienenelementen und sogar unter Verwendung unterschiedlicher Materialien modular zusammengesetzt werden kann.

Das Stützelement bildet die Schnittstelle zu der Tragstruktur des Fahrzeugs und das Schienenelement bildet die Schnittstelle zu der aufzunehmenden Last. Das Stützelement und das Schienenelement können jeweils so ausgestaltet sein, dass ihre Eigenschaften auf die entsprechende Funktion als Schnittstellenelement zu der Tragstruktur bzw. der aufzunehmenden Last angepasst sind.

Gemäß einer Ausführungsform ist das Stützelement aus einem ersten Material und das Schienenelement aus einem zweiten Material gefertigt, wobei das erste Material ein anderes Material als das zweite Material ist.

In anderen Worten sind das Stützelement und das Schienenelement aus unterschiedlichen Materialien mit unterschiedlichen Materialeigenschaften gefertigt. Beispielsweise kann das Schienenelement als statisch hochfester Kopf und das Stützelement als leichtes und starres Tragwerk ausgestaltet sein. Das Stützelement kann beispielsweise eine strang-gepresste Aluminiumstruktur und das Schienenelement ein Titan-Einsatz sein.

Das erste Material unterscheidet sich von dem zweiten Material dahingehend, dass diese Materialien unterschiedliche Zusammensetzungen und/oder unterschiedliche Eigenschaften haben. Beispielsweise ist das erste Material des Stützelements Aluminium oder eine Aluminiumlegierung oder ein Verbundwerkstoff, beispielsweise ein kohlenstofffaserverstärkter Kunststoff, bei dem Kohlenstofffasern in eine Kunststoffmatrix eingebettet sind, wobei als Matrix beispielsweise ein Epoxidharz, Duroplaste oder Thermoplaste verwendet werden. Das zweite Material kann beispielsweise Titan oder eine Titanlegierung sein.

Durch diesen Aufbau kann die Montageschiene an die Anforderungen der jeweiligen Umgebungen angepasst werden, indem ein geeignetes Schienenelement aus einem geeigneten ersten Material verwendet wird, das Stützelement aber über die gesamte Länge der Montageschiene aus demselben zweiten Material gefertigt ist. Insgesamt kann hierdurch das Gewicht der Montageschiene in ihrer Gesamtheit reduziert werden, ohne dass dabei an der Schnittstelle zu der Kabine, also an dem Schienenelement, auf die dort benötigten Materialeigenschaften verzichtet werden muss.

In einem Nassbereich kann beispielsweise ein Schienenelement aus Titan oder einer Titanlegierung verwendet werden, was beispielsweise einen vorteilhaften Korrosionsschutz und eine hohe mechanische Festigkeit bietet. Dennoch ist es nicht nötig, das vergleichsweise teure und schwere Material Titan für die gesamte Montageschiene zu verwenden. Das Stützelement kann weiterhin aus Aluminium oder einem kohlenstofffaserverstärkten Kunststoff bestehen, weil das Stützelement hinter einer äußeren Oberfläche des Innenraums des Fahrzeugs angeordnet ist und damit in gewisser Weise vor äußeren Einflüssen oder Beschädigungen geschützt ist.

Gemäß einer weiteren Ausführungsform weist das Stützelement mindestens ein Material aus der Gruppe von folgenden Materialien auf: Aluminium, eine Aluminiumlegierung, einen Kunststoff, einen kohlenstofffaserverstärkten Kunststoff, wobei das Schienenelement mindestens ein Material aus der Gruppe von folgenden Materialien aufweist: Aluminium, eine Aluminiumlegierung, Titan, eine Titanlegierung.

Gemäß einer weiteren Ausführungsform weist die Montageschiene mindestens zwei in Längsrichtung der Montageschiene angeordnete und aneinander angrenzende Stützelemente auf, wobei die Stützelemente mechanisch miteinander verbunden sind, so dass die Vertiefungen der Stützelemente sich aneinander anschließen.

Dieser Aufbau ermöglicht eine flexible Zusammensetzung der Montageschiene auf ein gewünschtes Längenmaß. Die entstandene Vertiefung kann mit einem oder mehreren Schienenelementen bestückt werden.

An dem Übergang von einem Stützelement zu dem nächsten Stützelement können geeignete mechanische Verbindungselemente verwendet werden, um die beiden Stützelemente mechanisch miteinander zu koppeln.

Gemäß einer weiteren Ausführungsform weist die Montageschiene mindestens zwei Schienenelemente auf, die in der Vertiefung angeordnet sind.

Die Länge der einzelnen Schienenelemente ist unabhängig von der Länge der Stützelemente. Es können mehrere Schienenelemente in der Vertiefung eines einzelnen Stützelements angeordnet werden. Ebenso kann sich ein Schienenelement über zwei oder mehr Stützelemente erstrecken.

Nachdem die Montageschiene aus mehreren aneinandergereihten einzelnen Stützelementen zusammengesetzt sein kann, werden diese mehreren Stützelemente als einheitliches Bauteil betrachtet, weil die mehreren aneinandergereihten Stützelemente einen durchgängigen Längskanal (die Vertiefung) ausbilden, in welchen ein oder mehrere Schienenelemente eingebracht werden können.

Gemäß einer weiteren Ausführungsform sind die zwei Schienenelemente unterschiedlich ausgestaltet.

Wie weiter oben geschrieben sind die Schienenelemente an die lokalen Anforderungen angepasst. In einem Nassbereich kann ein anderes Material für das Schienenelement verwendet werden als in einem Passagiersitzbereich.

Somit kann für die Montageschiene jeweils lokal der gewünschte Kompromiss aus den geforderten Eigenschaften der Materialien (z.B. mechanische Festigkeit, Korrosionsbeständigkeit, Gewicht, etc.) verwendet werden.

Gemäß einer weiteren Ausführungsform ist das Schienenelement in dem Stützelement in Form einer Schwalbenschwanzverbindung gehalten.

Das Schienenelement und die zugehörige Vertiefung in dem Stützelement sind einander entsprechend geformt. Das Schienenelement wird beispielsweise in Längsrichtung in die Vertiefung eingeschoben und die Vertiefung verjüngt sich nach oben (in Richtung der Öffnung der Vertiefung) hin, so dass das Schienenelement nicht aus der Vertiefung herausgehoben werden kann. Durch die Form der Vertiefung (d.h. des Querschnitts der Vertiefung) kann sich das Schienenelement in der Vertiefung nur in Längsrichtung der Vertiefung bewegen.

Gemäß einer weiteren Ausführungsform ist das Schienenelement in der Vertiefung des Stützelements mit einem oder mehreren Befestigungselementen fixiert, so dass eine Bewegung des Schienenelements in Längsrichtung der Vertiefung unterbunden wird.

Die Befestigungselemente können eine reversible mechanische Kopplung zwischen Schienenelement und Stützelement herstellen und dabei die Bewegung in Längsrichtung der Vertiefung unterbinden. Somit wird das Schienenelement in allen Richtungen in der Vertiefung fixiert. Als Befestigungselemente können beispielsweise Schrauben, Bolzen oder Nieten verwendet werden.

Gemäß einer weiteren Ausführungsform ist der Aufnahmeraum des Schienenelements so ausgestaltet, dass er neben dem Aufnehmen von Lasten einen ersten Installationsraum für Leitungen formt.

In diesem Installationsraum kann beispielsweise eine elektrische Leitung oder eine Kabelführung angeordnet sein, über welche elektrische Signale oder Energie übertragen werden.

Gemäß einer weiteren Ausführungsform weist das Stützelement zwei Stützbeine auf, welche sich weg von der Vertiefung erstrecken und so ausgestaltet sind, dass sie einen zweiten Installationsraum für Leitungen formen und teilweise umschließen.

Das Stützelement wird mit Hilfe der Stützbeine an dem Fahrzeug oder einem Tragelement des Fahrzeugs verbunden. Somit entsteht zwischen dem Tragelement und dem Stützelement ein weiterer Installationsraum, sozusagen unterhalb des Stützelements, in welchem Leitungen und Kabel vor äußeren Einflüssen geschützt verlegt werden können.

Die hier beschriebene Montageschiene setzt auf eine zweigeteilte Gestaltung der Montageschiene. Anstatt einer einstückigen Schiene wird eine zweistückige Schiene mit einem Stützelement und einem Schienenelement vorgeschlagen, wobei das Stützelement und das Schienenelement zunächst individuell und mit eigenen Eigenschaften gefertigt werden können und je nach lokalen Anforderungen kombiniert bzw. zu der fertigen Montageschiene zusammengesetzt werden können.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- **Fig. 1**: eine schematische Darstellung einer Montageschiene.
- **Fig. 2**: eine schematische Darstellung eines Stützelements.
- **Fig. 3**: eine schematische Darstellung eines Schienenelements.
- **Fig. 4**: eine schematische Darstellung einer Montageschiene unterhalb von Fußbodenpaneelen.
- **Fig. 5**: eine schematische Darstellung einer Montageschiene unterhalb von Fußbodenpaneelen.
- **Fig. 6**: eine schematische Darstellung einer Montageschiene unterhalb von Fußbodenpaneelen.
- **Fig. 7**: eine schematische Darstellung einer Montageschiene unterhalb von Fußbodenpaneelen.
- **Fig. 8**: eine schematische Darstellung einer Montageschiene.
- **Fig. 9**: eine schematische Darstellung eines Schienenelements mit einer Lastenstütze eines externen zu befestigenden Elements.

### Detaillierte Beschreibung von Ausführungsbeispielen

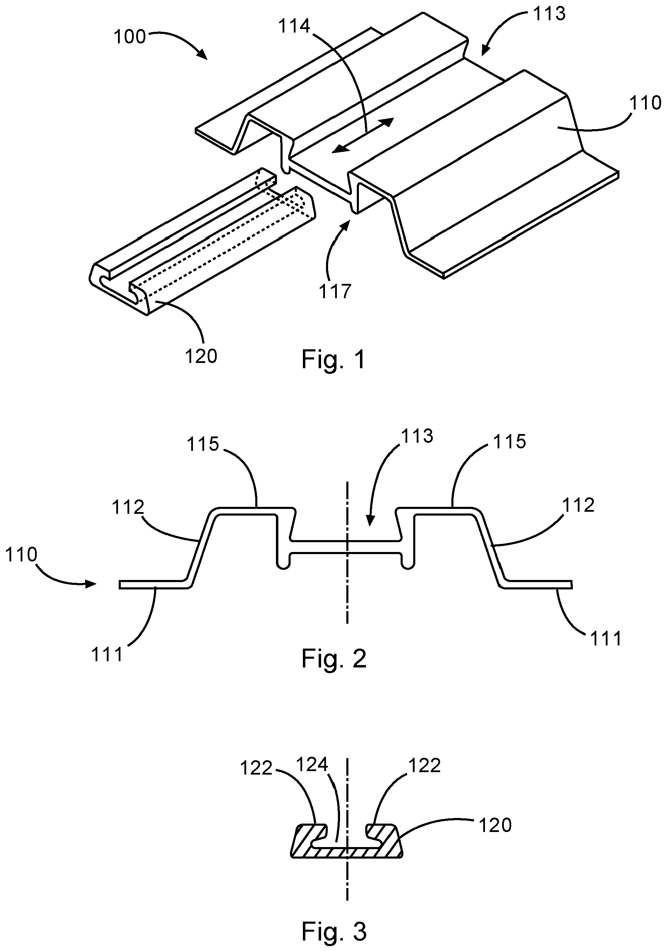

Fig. 1 zeigt eine schematische isometrische Darstellung einer Montageschiene 100, welche ein Stützelement 110 und ein Schienenelement 120 aufweist. Die Erstreckung der Montageschiene 100 in Längsrichtung 114 kann variieren und äußeren Anforderungen angepasst sein. Das Stützelement 110 weist eine längliche Vertiefung 113 auf, welche sich in Längsrichtung 114 erstreckt. Die Vertiefung 113 stellt einen Aufnahmeraum für das Schienenelement 120 dar. Das Schienenelement 120 wird in die Vertiefung 113 eingeführt, indem es an einer Stirnseite 117 in die Vertiefung 113 eingesteckt wird und in Längsrichtung 114 eingeschoben wird.

Um das Einschieben des Schienenelements 120 in die Vertiefung 113 zu erleichtern, können die Flächen der Vertiefung mit einer entsprechenden Oberflächenbehandlung versehen werden, beispielsweise mit Teflon-Spray eingesprüht werden. Wenn das Schienenelement 113 in seiner angestrebten Position ist, wird es befestigt. Es kann ebenfalls ein Dichtmittel verwendet werden, welches zwischen Schienenelement und Stützelement eingebracht wird, damit keine Fremdkörper entlang der Außenflächen des Schienenelements in die Vertiefung 113 eindringen. Fremdkörper an dieser Stelle können das Entnehmen und Austauschen des Schienenelements erschweren.

Die Seitenwände der Vertiefung 113 verhindern, dass sich das Schienenelement quer zu der Längsrichtung 114 bewegt. Aus der Vertiefung kann das Schienenelement 120 auch nicht nach oben entnommen oder herausgehoben werden, weil die Seitenwände der Vertiefung nach oben hin schräg verlaufen und die Öffnung der Vertiefung schmaler ist als die Breite der Vertiefung an deren Boden. In anderen Worten hat die Vertiefung eine nach oben hin kleiner werdende seitliche Ausdehnung.

Die seitlichen Außenflächen des Schienenelements sind entsprechend angeschrägt, so dass sie sich der Querschnittsform der Vertiefung anpassen. Diese Ausgestaltung des Querschnitts der Vertiefung und der äußeren Form des Schienenelements wird als Schwalbenschwanzverbindung bezeichnet.

Fig. 2 zeigt eine Frontalansicht auf die Stirnseite 117 des Stützelements 110 aus Fig. 1.

Das Stützelement 110 ist eine strang-gepresste Struktur, welche beispielsweise aus Aluminium besteht. Das Stützelement 110 weist neben der Vertiefung 113 zwei sich seitlich daran anschließende Stützschultern 115, jeweils ein Stützbein 112 an jeder Stützschulter, und eine Montagefläche 111 am Ende jedes Stützbeins auf. In diesem Ausführungsbeispiels ist das Stützelement symmetrisch zu seiner Hochachse.

In der Frontalansicht der Fig. 2 können die schräg verlaufenden Seitenflächen der Vertiefung gut erkannt werden.

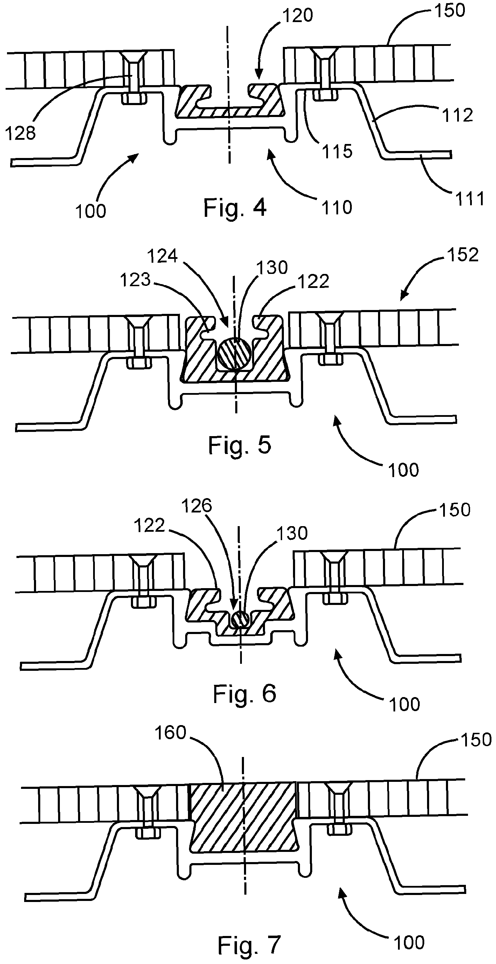

Die Stützschulter 115 dient dazu, dass ein Wand- oder Fußbodenpaneel aufgelegt und mit dem Stützelement 110 verbunden werden kann. Hierfür können beispielsweise Schrauben, Bolzen oder Nieten verwendet werden. Der entsprechende Aufbau ist im Detail in den Fig. 4 bis 8 gezeigt.

Die Stützbeine 112 sowie die sich daran anschließenden Montageflächen 111 dienen dazu, das Stützelement mit einer Tragstruktur des Fahrzeugs zu verbinden.

Fig. 3 zeigt eine Darstellung des Schienenelements 120, wie es zusammen mit dem Stützelement 110 aus Fig. 2 verwendet werden kann, um eine Montageschiene 100 aus Fig. 1 bereitzustellen.

Das Schienenelement 120 hat ein C-förmiges Profil, welches mit der Öffnung nach oben angeordnet ist, damit eine Lastenstütze eines zu befestigenden Elements in das Schienenelement 120 eingeführt und darin fixiert werden kann. Das Schienenelement 120 weist hierzu zwei Kragen 122 auf, welche einen Aufnahmeraum 124 definieren und teilweise umschließen.

Fig. 4 zeigt die Montageschiene 100 in einem montierten Zustand zusammen mit zwei Wand- oder Fußbodenpaneelen 150. Die Paneele 150 liegen auf den Stützschultern 115 auf und lassen einen Zugang zu dem Schienenelement 120 frei. Bei den Paneelen 150 kann es sich beispielsweise um Verbundplatten handeln. Die Art der Paneele kann jedoch beliebig sein. Es sind beliebige Materialien und Paneele mit der Montageschiene 100 verwendbar. Die Paneele 150 sind mit der Stützschulter 115 mechanisch gekoppelt, beispielsweise mit einem Befestigungselement 128 in Form einer Schraube mit der Stützschulter 115 verbunden. Die Stützschultern 115 haben mindestens abschnittsweise eine ebene Auflagefläche, auf der die Paneele 150 aufliegen. Die Stützbeine 112 erstrecken sich von den Stützschultern 115 weg von der Auflagefläche für die Paneele und werden mittels den Montageflächen 111 an die Tragstruktur 190 des Fahrzeugs fixiert.

In der Darstellung in Fig. 4 ist das Schienenelement 120 abgesenkt im Vergleich zu der oberen Fläche der Paneele 150.

Fig. 5 zeigt eine Variante der in Fig. 4 gezeigten Montageschiene mit einem modifizierten Schienenelement 120. Während das Schienenelement 120 in Fig. 4 versenkt zwischen den zwei Paneelen 150 angeordnet ist, hat das Schienenelement 120 in Fig. 5 eine größere Höhe und die Oberfläche der Kragen 122 schließt bündig ab mit einer oberen Oberflächen 152 der Paneele. Der Aufnahmeraum 124 bietet in der Variante der Fig. 5 Raum für eine Leitung 130, welche sich in Längsrichtung des Schienenelements 120 erstreckt. Die Leitung 130 kann als Signalkabel oder Leistungskabel für Elektronik dienen, die beispielsweise in einem Sitz angeordnet ist, welcher mit dem Schienenelement 120 verbunden ist.

Eine Lastenstütze eines zu befestigenden Elements wird in den lateralen Einkerbungen 123 des Aufnahmeraums 124 platziert, so dass keine mechanische Belastung auf die Leitung 130 ausgeübt wird.

Fig. 6 zeigt eine weitere Variante für die Ausgestaltung der Montageschiene 100. In Fig. 6 ist das Schienenelement bezogen auf die Paneele 50 versenkt, allerdings wird ein Raum für eine Leitung 130 dadurch bereitgestellt, dass das Schienenelement eine Ausbuchtung nach unten in Richtung des Stützelements aufweist. Hierfür ist das Stützelement 110 auch entsprechend geformt, um Platz für die Leitung 130 zu schaffen, welche sich in dem Installationsraum 126 befindet.

Fig. 7 zeigt einen Abschnitt der Montageschiene, in welchem kein Schienenelement mit Aufnahmeraum angeordnet ist, sondern ein Blindelement 160. Das Blindelement kann in einem solchen Bereich der Montageschiene verwendet werden, in welchem keine Befestigung von externen Elementen erforderlich ist. Somit sorgt das Blindelement dafür, dass an dieser Stelle keine Vertiefung entsteht, in welcher sich Schmutz ansammeln kann oder welche eine Stolpergefahr darstellen könnte. Die Oberfläche des Blindelements und die obere Fläche der Paneele sind auf gleicher Höhe, d.h. sie schließen bündig ab.

Die Montageschiene kann aus mehreren Längsabschnitten von Stützelementen 110 und mehreren in der zugehörigen Vertiefung angeordneten Schienenelementen mit oder ohne Blindelemente bestehen. Schienenelemente aus verschiedenen Materialien und von verschiedener Struktur und sogar Blindelemente von jeweils gewünschter Länge können in einem Stützelement verwendet werden, um eine Montageschiene in ihrer Gesamtheit nach Bedarf zusammenzustellen.

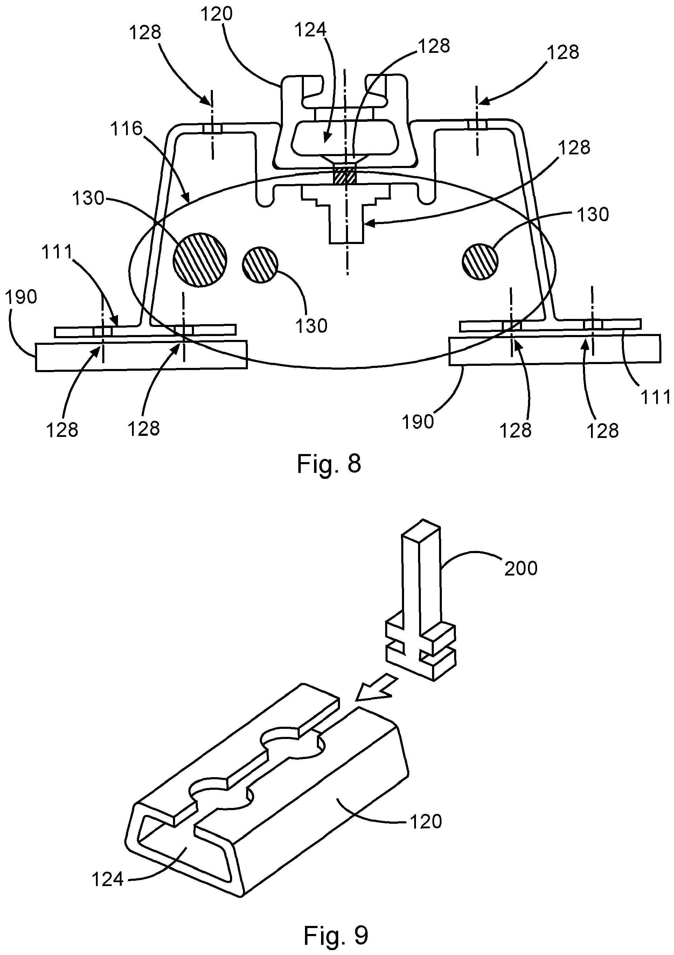

Fig. 8 zeigt eine weitere Variante der Montageschiene 100. Das Stützelement 110 umschließt mit seinen Stützschultern 115, Stützbeinen 112 und den Montageflächen 111 einen Installationsraum 116, in welchen eine oder mehrere Leitungen 130 verlegt sein können.

In Fig. 8 ist weiterhin gezeigt, dass die Montageflächen 111 mittels Befestigungselementen 128 (Schrauben, Bolzen, Nieten, oder dergleichen) mit einer Tragstruktur 190 eines Fahrzeugs verbunden sind. Befestigungselemente 128 werden ebenfalls verwendet, um die auf den Stützschultern 115 aufliegenden Paneele mit den Stützschultern mechanisch zu koppeln.

Um eine Verschiebung des Schienenelements 120 in Längsrichtung der Vertiefung 113 zu verhindern, ist das Schienenelement 120 in einem Bodenbereich seines Aufnahmeraums 124 mit dem Stützelement 110 verbunden, und zwar mittels Befestigungselementen 128, welche in regelmäßigen oder unregelmäßigen Abständen angeordnet sind. Das Befestigungsmittel 128 ist im Beispiel der Fig. 8 eine Senkkopfschraube. Es können aber auch andere geeignete Befestigungsmittel wie Bolzen oder Nieten verwendet werden.

Fig. 9 zeigt eine schematische Darstellung eines Schienenelements 120, dessen Kragen mit einem Befestigungsraster versehen sind. Das Befestigungsraster ist in Form von lateralen Vertiefungen in den Kragen des C-Profils des Schienenelements bereitgestellt. Eine Lastenstütze 200 eines externen zu befestigenden Elements (nicht dargestellt) ist gezeigt. Diese Lastenstütze 200 wird in den Aufnahmeraum 124 des Schienenelements 120 eingebracht und an der gewünschten Position befestigt.

Die Montageschiene 100 wie hierin beschrieben kann in einem Beispiel so aufgebaut sein, dass in einem Nassbereich ein Schienenelement aus Titan oder einer Titanlegierung verwendet wird. Titan hat ein hohes spezifisches Gewicht und ist im Übrigen sehr teuer. Aus Festigkeitsgründen kann es aber gefordert sein, dass das Schienenelement (der Kopf der Montageschiene), welches für die Aufnahme von Stuhlbeinen oder Monumenten dient, mit einem genormten Lochraster aus hochfestem Material besteht. Es ist aber nicht notwendig, dieses hochfeste, schwere und teure Material über den gesamten Querschnitt der Montageschiene zu verwenden. Vielmehr reicht es aus, wenn das Schienenelement diese Anforderungen erfüllt. Das Stützelement kann aus einem anderen Material gefertigt sein. Das Stützelement kann aus Aluminium oder einem kohlenstofffaserverstärkten Kunststoff gefertigt sein, wobei das Schienenelement mit dem Stützelement mit Befestigungselementen, beispielsweise Titan-Bolzen, verbunden ist. Die hier beschriebene Montageschiene erlaubt die kombinierte Verwendung von kohlenstofffaserverstärkten Kunststoffen oder Thermoplast-Materialien in Kombination mit Metall, wie beispielsweise Titan. Das Schienenelement ist sogar austauschbar, ohne dass die Unterkonstruktion, also das Stützelement, ausgebaut werden muss. Das Schienenelement kann auch aus Aluminium bestehen oder Aluminium aufweisen, wo geringere Festigkeitsanforderungen dies erlauben. Mit der hier beschriebenen Montageschiene wird die Verwendung von schweren und teuren Materialien auf ein Minimum reduziert.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: Montageschiene
- 110: Stützelement
- 111: Montagefläche
- 112: Stützbein
- 113: Vertiefung
- 114: Längsrichtung
- 115: Stützschulter
- 116: Installationsraum
- 117: Stirnseite
- 120: Schienenelement
- 122: Kragen
- 123: laterale Einkerbung
- 124: Aufnahmeraum
- 126: Installationsraum
- 128: Befestigungselement
- 130: Leitung
- 150: Wand- oder Fußbodenpaneel
- 152: Oberfläche
- 160: Blindelement
- 190: Tragstruktur
- 200: Lastenstütze

## Patentansprüche

1. Montageschiene (100) zum Aufnehmen und Halten von Lasten (200) in einem Innenraum eines Fahrzeugs, wobei die Montageschiene (100) aufweist:
ein Stützelement (110) mit einer sich in Längsrichtung (114) des Stützelements (110) erstreckenden Vertiefung (113); und
ein Schienenelement (120);
wobei das Schienenelement (120) in der Vertiefung (113) des Stützelements (110) angeordnet und mit dem Stützelement (110) mechanisch gekoppelt ist;
wobei das Schienenelement (120) einen Aufnahmeraum (124) zum Aufnehmen und Halten von Lasten (200) aufweist.

2. Montageschiene (100) nach Anspruch 1,
wobei das Stützelement (110) aus einem ersten Material gefertigt ist;
wobei das Schienenelement (120) aus einem zweiten Material gefertigt ist;
wobei das erste Material ein anderes Material als das zweite Material ist.

3. Montageschiene (100) nach Anspruch 1,
wobei das Stützelement (110) mindestens ein Material aus der Gruppe von folgenden Materialien aufweist: Aluminium, eine Aluminiumlegierung, einen Kunststoff, einen kohlenstofffaserverstärkten Kunststoff;
wobei das Schienenelement (120) mindestens ein Material aus der Gruppe von folgenden Materialien aufweist: Aluminium, eine Aluminiumlegierung, Titan, eine Titanlegierung.

4. Montageschiene (100) nach Anspruch 1 oder 2,
aufweisend mindestens zwei in Längsrichtung der Montageschiene angeordnete und aneinander angrenzende Stützelemente (110), wobei die Stützelemente mechanisch miteinander verbunden sind, so dass die Vertiefungen (113) der Stützelemente sich aneinander anschließen.

5. Montageschiene (100) nach einem der voranstehenden Ansprüche, aufweisend mindestens zwei Schienenelemente (120), die in der Vertiefung (113) angeordnet sind.

6. Montageschiene (100) nach Anspruch 5,
wobei die zwei Schienenelemente (120) unterschiedlich ausgestaltet sind.

7. Montageschiene (100) nach einem der voranstehenden Ansprüche,
wobei das Schienenelement (120) in dem Stützelement (110) in Form einer Schwalbenschwanzverbindung gehalten ist.

8. Montageschiene (100) nach einem der voranstehenden Ansprüche,
wobei das Schienenelement (120) in der Vertiefung (114) des Stützelements (110) mit einem oder mehreren Befestigungselementen (128) fixiert ist, so dass eine Bewegung des Schienenelements (120) in Längsrichtung (114) der Vertiefung (114) unterbunden wird.

9. Montageschiene (100) nach einem der voranstehenden Ansprüche,
wobei der Aufnahmeraum (124) des Schienenelements (120) so ausgestaltet ist, dass er neben dem Aufnehmen von Lasten einen ersten Installationsraum (116) für Leitungen formt.

10. Montageschiene (100) nach einem der voranstehenden Ansprüche,
wobei das Stützelement (110) zwei Stützbeine (112) aufweist, welche sich weg von der Vertiefung (113) erstrecken und so ausgestaltet sind, dass sie einen zweiten Installationsraum (126) für Leitungen formen und teilweise umschließen.
